# EUROPEAN PATENT APPLICATION

(11) **EP 4 678 724 A1**
(43) Date of publication of application: **14.01.2026**
(21) Application number: 24188092.1
(22) Date of filing: 11.07.2024
(51) Int. Cl.: C11B 3/00, B01D 11/02, B01D 53/14

(54) **PROCESS FOR REDUCING CONTAMINANTS IN ORGANIC MATERIAL**

(71) Applicant: Cargill, Incorporated, Wayzata, Minnesota 55391 (US)
(72) Inventor: Flynn, Daniel Michael, Wayzata, 55391 (US); Vandenbempt, Pieter Gaston J., Wayzata, 55391 (US)
(74) Representative: Cargill IP Department

(57) **Abstract**

The present invention relates to a method for reducing the content of mineral oil saturated hydrocarbons (MOSH) in organic material such as oilseed meal and flakes. It further relates to the oil-depleted organic material obtained by the method and its use in feed and food products.

## Description

### FIELD OF THE INVENTION

The present invention relates to a process for reducing the mineral oil hydrocarbons (MOH) in organic material, such as oilseed flakes and meals.

### BACKGROUND OF THE INVENTION

Mineral Oil Hydrocarbons (MOH) may be present as contaminants in oils and fats, oilseed flakes and meals as well as in foods and feed prepared thereof. MOH are a complex mixture of molecules that are usually categorized into two main groups: Mineral Oil Saturated Hydrocarbons (MOSH) and Mineral Oil Aromatic Hydrocarbons (MOAH). MOSH are linear and branched (cyclo)alkanes. MOAH consists of highly alkylated mono/polycyclic aromatic hydrocarbons.

Contamination of food and feed products with MOH may occur through migration from materials in contact with food such as plastic materials, like polypropylene or polyethylene, recycled cardboard and jute bags. Contamination also occurs from the use of mineral oil-based food additives or processing aids and from unintentional contamination like for example from lubricants or exhaust gases from combustion engines.

From a health perspective, it is desirable to reduce contamination with MOH in food and feed products during their processing.

A potential source of MOH contamination of organic material is occurring in a process wherein oil-containing organic material is brought in contact with solvent. The oil-depleted material may get contaminated with mineral oil.

There is thus a need to reduce the levels of MOSH contaminations in organic material other than oils. The present invention provides such a method.

### SUMMARY OF THE INVENTION

The present invention relates to a method for reducing the content of mineral oil saturated hydrocarbons (MOSH) in organic material, and the method is comprising the steps of:
i) Bringing oil-containing organic material in contact with solvent;
ii) Extracting oil from the oil-containing organic material; and obtaining oil-depleted organic material;
iii) Recovering solvent from the oil-depleted organic material;
iv) Collecting solvent- and oil- depleted organic material; and
   Wherein at least part of the solvent has been recycled from an absorber column containing a medium-chain triglyceride (MCT) oil; and
   Wherein the solvent- and oil-depleted organic material is containing not more than 6 wt.% of oil based upon the weight of the oil-depleted organic material.

The present invention also relates to solvent- and oil-depleted organic material with reduced MOSH content obtainable by the method of the present invention.

The present invention further relates to a food product, or feed product comprising the solvent- and oil-depleted organic material or solvent-depleted and oil-lean organic material of the present invention; and at least one other feed and/or food ingredient.

### DETAILED DESCRIPTION

### Method for reducing the content of mineral oil saturated hydrocarbons (MOSH) in organic material

The present invention relates to a method for reducing the content of mineral oil saturated hydrocarbons (MOSH) in organic material, and the method is comprising the steps of:
i) Bringing oil-containing organic material in contact with solvent;
ii) Extracting oil from the oil-containing organic material; and obtaining oil-depleted organic material;
iii) Recovering solvent from the oil-depleted organic material;
iv) Collecting solvent- and oil- depleted organic material; and
   Wherein at least part of the solvent has been recycled from an absorber column containing a medium-chain triglyceride (MCT) oil; and
   Wherein the solvent- and oil-depleted organic material is containing not more than 6 wt.% of oil based upon the weight of the oil-depleted organic material.

The present invention relates to a method for reducing the content of mineral oil saturated hydrocarbons (MOSH) in organic material, and the method is comprising the steps of:
i) Bringing oil-containing organic material in contact with solvent;
ii) Extracting oil from the oil-containing organic material; and obtaining oil-depleted organic material;
iii) Recovering solvent from the oil-depleted organic material;
iv) Collecting solvent- and oil- depleted organic material with a content of MOSH that is reduced; and
   Wherein at least part of the solvent has been recycled from an absorber column containing a medium-chain triglyceride (MCT) oil.

The present invention relates to the use of medium chain triglyceride (MCT) oil in an absorber column to reduce the content of mineral oil saturated hydrocarbons (MOSH) in oil-depleted organic material, wherein
i) An oil-containing organic material is brought in contact with solvent;
ii) Oil is extracted from the oil-containing organic material; and an oil-depleted organic material is obtained;
iii) Solvent is recovered from the oil-depleted organic material; and
iv) A solvent- and oil- depleted organic material is collected;
Wherein at least part of the solvent has been recycled from an absorber column containing a medium-chain triglyceride (MCT) oil.

The present invention relates to the use of medium chain triglyceride (MCT) oil in an absorber column to reduce the content of mineral oil saturated hydrocarbons (MOSH) in oil-depleted organic material, wherein
i) An oil-containing organic material is brought in contact with solvent;
ii) Oil is extracted from the oil-containing organic material; and an oil-depleted organic material is obtained;
iii) Solvent is recovered from the oil-depleted organic material; and
iv) A solvent- and oil- depleted organic material with a reduced content of MOSH is collected;
Wherein the solvent has been recycled from an absorber column containing a medium-chain triglyceride (MCT) oil.

The present invention relates to a method for reducing the content of mineral oil saturated hydrocarbons (MOSH) in organic material, and the method is comprising the steps of:
i) Bringing oil-containing organic material in contact with solvent;
ii) Extracting oil from the oil-containing organic material; and obtaining oil-depleted organic material;
iii) Recovering solvent from the oil-depleted organic material;
iv) Adding a material containing oil and obtainable as byproducts from oilseed crushing and/or refining process for obtaining an oil-lean organic material;
v) Collecting oil-lean organic material; and
   Wherein at least part of the solvent has been recycled from an absorber column containing a medium-chain triglyceride (MCT) oil.

It is well-known in different stages of the oilseed crushing and/or refining process are obtained byproducts that still contain oil in a sufficient amount and which are allowably added into feed products.

In the present invention, such byproducts from the oilseed crushing and/or refining process can be selected from, but no limited to, gums containing oil, bleaching clay containing oil, soap stock containing oil, emulsions from soap stock splitting containing oil, filter aids from filtration processes, filter aids from dewaxing process; and the like.

In the present invention, the "gums containing oil" can be gums obtained as a byproduct of degumming process of vegetable oils.

In the present invention, "soap stock" can be the byproduct from vegetable oil refining process.

The present invention relates to a method for reducing the content of mineral oil saturated hydrocarbons (MOSH) in organic material, and the method is comprising the steps of:
i) Bringing oil-containing organic material in contact with solvent;
ii) Extracting oil from the oil-containing organic material; and obtaining oil-depleted organic material;
iii) Recovering solvent from the oil-depleted organic material;
iv) Adding a material containing oil and obtainable as byproducts from oilseed crushing and/or refining process, for obtaining an oil-lean organic material;
v) Collecting oil-lean organic material with a content of MOSH that is reduced; and
   Wherein at least part of the solvent has been recycled from an absorber column containing a medium-chain triglyceride (MCT) oil.

The present invention relates to the use of medium chain triglyceride (MCT) oil in an absorber column to reduce the content of mineral oil saturated hydrocarbons (MOSH) in oil-depleted organic material, wherein
i) An oil-containing organic material is brought in contact with solvent;
ii) Oil is extracted from the oil-containing organic material; and an oil-depleted organic material is obtained;
iii) Solvent is recovered from the oil-depleted organic material;
iv) Adding a material containing oil and obtainable as byproducts from oilseed crushing and/or refining process for obtaining an oil-lean organic material;
v) Collecting oil-lean organic material; and
   Wherein at least part of the solvent has been recycled from an absorber column containing a medium-chain triglyceride (MCT) oil.

The present invention relates to the use of medium chain triglyceride (MCT) oil in an absorber column to reduce the content of mineral oil saturated hydrocarbons (MOSH) in oil-depleted organic material, wherein
i) An oil-containing organic material is brought in contact with solvent;
ii) Oil is extracted from the oil-containing organic material; and an oil-depleted organic material is obtained;
vi) Solvent is recovered from the oil-depleted organic material;
vii) Adding a material containing oil and obtainable as byproducts from oilseed crushing and/or refining process for obtaining an oil-lean organic material;
viii) Collecting oil-lean organic material with a content of MOSH that is reduced; and
   Wherein at least part of the solvent has been recycled from an absorber column containing a medium-chain triglyceride (MCT) oil.

The "oil-depleted organic material" is the organic material which is reduced in oil content in view of the starting material, i.e. the oil-containing organic material, and which has been obtained after the extraction process to remove the oil. The oil-depleted organic material is containing not more than 6 wt.% of oil based upon the weight of the oil-depleted organic material, preferably from 0.5 to 4 wt%, more preferably from 0.5 to 1 wt.% of oil based upon the weight of the oil-depleted organic material.

The "solvent- and oil- depleted organic material" is the oil-depleted organic material from which the solvent has been recovered. The levels of solvent have been reduced to an amount of less than 1000 ppm, preferably from 10 to 500 ppm, more preferably from 10 to 300 ppm of solvent.

In an aspect of the invention the moisture content is reduced.

The "solvent- and oil- depleted organic material with a reduced content of MOSH" is solvent- and oil- depleted organic material wherein the content of MOSH is lower than the MOSH content of solvent- and oil- depleted organic material which has been in contact with a solvent that has been recycled from an absorber wherein the absorber column is not containing MCT oil.

The "oil-lean organic material" is the oil-depleted material to which oil-containing materials are added such as gums containing oil, bleaching clay containing oil, soap stock containing oil, emulsions from soap stock splitting containing oil, and the like.

In an aspect of the invention, the oil content of the oil-lean organic material is not more than 8 wt% based upon the weight the oil-lean organic material, preferably not more than 6 wt.%.

Oil-containing organic material can be originating from plants, animals and micro-organisms, preferably plant material.

The oil-containing organic material is obtained from oil-bearing seeds or fruits selected from the group consisting of soybeans, rapeseeds, sunflower seeds, peanuts, cottonseeds, palm kernels, palm fruits, coconuts, com germs, olives pomace, mustard seeds, sesame seeds, shea nuts, tomato pomace, carinata seeds, camelina seeds, pongamia bean, grapeseed and combinations of two or more thereof.

In a aspect of the invention, the oil-containing organic material is obtained from oil-bearing seeds or fruits selected from the group consisting of soybeans, rapeseeds, sunflower seeds, olives pomace, and combinations of two or more thereof.

In an aspect of the invention, the oil-containing organic material is obtained from soybeans.

The oil-containing organic material may be organic-material from which oil was already partially removed by means of mechanical processing. The oil-containing organic material may have been treated in order to facilitate oil release during the solvent extraction process. Examples of such treatment are, but are not limited to cleaning, dehulling, drying, heating, cooking, cracking, flaking, expelling, extruding and the like.

In an aspect of the invention, it relates to a method for reducing the content of mineral oil saturated hydrocarbons (MOSH) in organic material, and the method is comprising the steps of:
i) Dehulling oil-containing organic material;
ii) Optionally flaking the oil-containing organic material;
iii) Bringing oil-containing organic material in contact with solvent and extracting oil for obtaining oil-depleted organic material;
iv) Desolventizing and/or toasting oil-depleted organic material;
v) Optionally drying and/or cooling of the oil-depleted organic material;
vi) Optionally milling the oil-depleted organic material;
vii) Collecting solvent- and oil- depleted organic material; and
   Wherein at least part of the solvent has been recycled from an absorber column containing a medium-chain triglyceride (MCT) oil.

In an aspect of the invention, it relates to a method for reducing the content of mineral oil saturated hydrocarbons (MOSH) in organic material, and the method is comprising the steps of:
i) Dehulling oil-containing organic material;
ii) Optionally flaking the oil-containing organic material;
iii) Bringing oil-containing organic material in contact with solvent and extracting oil for obtaining oil-depleted organic material;
iv) Desolventizing and/or toasting oil-depleted organic material;
v) Optionally drying and/or cooling of the oil-depleted organic material;
vi) Optionally milling the oil-depleted organic material;
vii) Collecting solvent- and oil- depleted organic material; and
   Wherein at least part of the solvent has been recycled from an absorber column containing a medium-chain triglyceride (MCT) oil; and
   Wherein the oil-containing organic material is obtained from oil-bearing seeds or fruits selected from the group consisting of soybeans, rapeseeds, sunflower seeds, olives pomace, and combinations of two or more thereof.

### Step iii) - Bringing oil-containing organic material in contact with solvent

The solvent may be any type of organic solvent such as, and may be selected from hexane, acetone, toluene, petroleum ether, diethyl ether, ethanol, n-heptane, isopropanol, acetone, chloroform, methanol, and 1-butanol, terpenes, or any combination of two or more thereof.

In an aspect of the invention, the solvent is containing hexane.

The term "hexane" is encompassing commercial hexane having boiling point in the temperature range of 65-69°C. Most commercial hexane available contains approximately 65% of n-hexane, with the remaining 35% of the composition being cyclopentane and hexane isomers.

At least part of the solvent has been recycled from an absorber (or absorption) column containing a medium-chain triglyceride (MCT) oil.

The solvent can be freshly used, or when it is recycled solvent it has not been in contact with mineral oil.

In an aspect of the invention, up to 100% the solvent has been recycled from an absorber (or absorption) column containing a medium-chain triglyceride (MCT) oil, preferably from 80 to 100% of the solvent has been recycled from an absorber (or absorption) column containing a medium-chain triglyceride (MCT) oil.

A "medium-chain triglyceride (MCT) oil" in the present invention is encompassing a composition comprising triglycerides, diglycerides, monoglycerides and/or free fatty acid having a carbon chain length in a range of C6 to C12. The fatty acid moiety of the MCT oil may have a combined content of fatty acids having a carbon chain length from C6 to C12 in an amount of more than 70%, more than 75%, or more than 80 wt.% on total weight of the fatty acid moiety. Preferably, the fatty acid moiety of the MCT oil has a combined content of C8 and C10 in a range of more than 92 wt%, more than 94 wt%, more than 96 wt % on total weight of the fatty acid moiety. More preferably, the fatty acid moiety of the MCT oil has a content of C8 in a range of from 45 to 70 wt%, from 48 to 67 wt%, or from 50 to 65 wt%; and a content of C10 from 30 to 50 wt%, from 32 to 47 wt%, or from 34 to 45 wt% on total weight of the fatty acid moiety.

The MCT oil may have a free fatty acid content of less than 50 wt.%, less than 40 wt.% or less than 30 wt.% on total weight of the MCT oil. In a preferred aspect of the invention, the MCT oil has a content of free fatty acids of less than 1 %, less than 0.7 wt.% or even less than 0.5 wt.% on total weight of the MCT oil.

The MCT oil is a commercially available oil or may be obtained via any process available. Typically, the MCT oil is obtained by randomly interesterifying glycerine and medium-chain fatty acids (MCFA). These medium chain fatty acids are typically sourced from vegetable lauric oils. The term "vegetable lauric oil" is encompassing vegetable oils having a content of C6 to C12 fatty acids of more than 50%. Examples of such a vegetable lauric oil include coconut oil, palm kernel oil, babassu oil, cohune oil, tacum oil and cuphea oil or any mixture of two or more thereof. For the purposes of the present invention, the MCT source will preferably be sourced from coconut oil, palm kernel oil, or mixtures thereof. The medium chain fatty acids may for example be obtained by hydrolysis (splitting) of the lauric vegetable oil followed by a further purification of the medium chain fatty acids, e.g. by distillation.

In an aspect of the invention, the MCT oil in the absorption column is solvent-lean MCT oil, containing solvent in an amount of from 0.1 to 0.6 wt.%, 0.2 to 0.5 wt.%, or from 0.3 to 0.4 wt.% on total weight of the solvent-lean MCT oil.

Absorption columns of any suitable configuration may be used.

The absorption column may include packing material such as, but not limited to, rachid rings or ceramic sadles, for increasing the intermixing of the MCT oil and an effluent gas that is containing the solvent, and thus facilitating the transfer of solvent.

In an aspect of the invention the absorber column is operating at a temperature in a range of from 10 to 32°C, from 15 to 30°C, or from 18 to 27°C. At this temperature a contaminant-lean solvent can be obtained, without running the risk that the absorber column is no longer operating smoothly due to crystallization of the absorption medium, i.e. the MCT-oil.

A contaminant lean solvent is a solvent free from MOSH or at least low in MOSH content.

In an aspect of the invention, the contaminant lean solvent is containing less than 100 ppm of MOSH, preferably less than 50 ppm, more preferably less than 10 ppm.

### Step iii) - Extracting oil-containing organic material with solvent

The extraction is performed in an extractor unit. The extractor unit may have any suitable type of extractor design such as, but not limited to, an immersion extractor or a percolation extractor. Typically, the extractor unit is operated such that a stream of solvent and a stream of oil-containing organic material is introduced into the extractor unit and flowing in counter-current directions through the extractor unit.

The extraction results in obtaining a solvent-wet oil-depleted organic material

### Step iv) - Desolventizing and/or toasting oil-depleted organic material

In step iv) of the method according to the invention, solvent is recovered from the solvent-wet oil-depleted organic material in a desolventizing/toaster unit. The temperature of the material may be increased by any means of direct or indirect heating, such as for example by means of steam injection into desolventizing unit. The desolventizing unit may be configured as a conventional desolventizer, using direct and/or indirect steam, a flash desolventizer, a fluid bed desolventizer, or a vacuum desolventizing/stripping unit.

In an aspect of the invention, the oil-depleted organic material is advancing through the desolventizer/toaster unit for allowing to evaporate the solvent, while at the end of the desolventizing/toasting step the oil-depleted organic material is partially dried.

In an aspect of the invention, the first part of the process may be conducted at a temperature of above 150°C for a short period of time, only a few seconds, while the latter part of the step is conducted at a temperature of around 100°C.

This method step is conducted such that denaturation of proteins present in the oil-depleted organic material is kept to a minimum.

The solvent recovery in step iv) of the method according to the invention results in solvent- oil-depleted organic material, having a solvent content of less than 2 wt.%, less than 1 wt.% or even less than 0.5 wt.% of solvent on total weight of the solvent- and oil-depleted organic material.

### Step v) - Drying of the solvent- and oil-depleted material

In step v) of the method according to the invention, the partially dried solvent- and oil-depleted organic material may be further dried.

In an aspect of the invention a meal dryer can be used for this method step.

### Step vi) -Milling the oil-depleted organic material

In an aspect of the invention, the solvent- and oil-depleted organic material is milled/grinded. Any suitable equipment can be used; most often a hammer mill is applied.

The milled/grinded solvent- and oil-depleted organic material is typically used in animal feed. For application, the milling/grinding is usually not applied.

### Step vii) -collecting the solvent-, oil-depleted organic material

The solvent- oil-depleted organic material has an oil content of not more than 6wt.% of oil based upon the weight of the solvent-,oil-depleted organic material, preferably from 0.5 to 4 wt.%, more preferably from 0.5 to 1 wt.% of oil based upon the weight of the solvent-, oil-depleted organic material.

The solvent- oil-depleted organic material has an oil content of not more than 6wt.% of oil based upon the weight of the solvent-,oil-depleted organic material, preferably from 0.5 to 4 wt%, more preferably from 0.5 to 1 wt.% of oil based upon the weight of the solvent-, oil-depleted organic material, and a MOSH content of not more than 10 ppm, preferably not more than 5 ppm, more preferably less than 2 ppm, most preferably less than 1 ppm.

### Solvent-depleted and oil-lean organic material

In an aspect of the invention, it relates to a method for reducing the content of mineral oil saturated hydrocarbons (MOSH) in organic material, and the method is comprising the steps of:
i) Dehulling oil-containing organic material;
ii) Optionally flaking the oil-containing organic material;
iii) Bringing oil-containing organic material in contact with solvent and extracting oil for obtaining oil-depleted organic material;
iv) Desolventizing and/or toasting oil-depleted organic material; and adding a material containing oil and obtainable as byproducts from oilseed crushing and/or refining process for obtaining an oil-lean organic material;
v) Optionally drying and/or cooling of the oil-depleted organic material;
vi) Optionally milling the oil-depleted organic material;
vii) Collecting solvent- and oil- depleted organic material; and
   Wherein at least part of the solvent has been recycled from an absorber column containing a medium-chain triglyceride (MCT) oil.

In an aspect of the invention, it relates to a method for reducing the content of mineral oil saturated hydrocarbons (MOSH) in organic material, and the method is comprising the steps of:
i) Dehulling oil-containing organic material;
ii) Optionally flaking the oil-containing organic material;
iii) Bringing oil-containing organic material in contact with solvent and extracting oil for obtaining oil-depleted organic material;
iv) Desolventizing and/or toasting oil-depleted organic material; and adding a material containing oil and obtainable as byproducts from oilseed crushing and/or refining process for obtaining an oil-lean organic material;
v) Optionally drying and/or cooling of the oil-depleted organic material;
vi) Optionally milling the oil-depleted organic material;
vii) Collecting solvent- and oil- depleted organic material; and
   Wherein at least part of the solvent has been recycled from an absorber column containing a medium-chain triglyceride (MCT) oil; and
   Wherein the oil-containing organic material is obtained from oil-bearing seeds or fruits selected from the group consisting of soybeans, rapeseeds, sunflower seeds, olives pomace, and combinations of two or more thereof.

In an aspect of the invention, during or after desolventizing and/or toasting oil-depleted organic material, a material containing oil and obtainable as byproducts from oilseed crushing and/or refining process is added for obtaining an oil-lean organic material

In the present invention, such byproducts from the oilseed crushing and/or refining process can be selected from, but no limited to, gums containing oil, bleaching clay containing oil, soap stock containing oil, emulsions from soap stock splitting containing oil, filter aids from filtration processes, filter aids from dewaxing process; and the like.

The oil content of the oil-lean organic material is not more than 8 wt% based upon the weight the oil-lean organic material, preferably not more than 6 wt.%.

In an aspect of the invention, the oil-lean material is having an oil content of not more than 8 wt% based upon the weight the oil-lean organic material, preferably not more than 6 wt.% and a MOSH content of not more than 10 ppm, preferably not more than 5 ppm, more preferably less than 2 ppm, most preferably less than 1 ppm, .

### Food or Feed Product

In an aspect of the invention, a food product or feed product is comprising the solvent- and oil-depleted organic material or solvent-depleted and oil-lean organic material of the present invention; and at least one other feed and/or food ingredient.

The feed product can be used for different animals, being young or adult animals. It may nourish and more in particular may promote the growth and development of animals.. The feed product of the present invention can be feed suitable for companion animals (such as dogs, cats, birds, fish, pigs, rodents, horses, reptiles, and turtles) and other types of animals such as chickens, turkeys, game birds (e.g. pheasants, grouse, partridges, ducks, geese, swans, doves, pigeons), amphibians (for example, frogs, salamander), reptiles, cattle (e.g., dairy or beef), fish, pigs, horses, sheep, goats.

The "at least one other feed and/or food ingredient" is selected from the group consisting of proteins, carbohydrates, vitamins, minerals and water.

Finally, the present invention also relates the use of MCT oil as absorber oil for recovering solvent from an effluent gas of a solvent extraction system for vegetable oil extraction.

In an aspect of the invention, the food product may be a finished product or a food ingredient that may be further processed for preparing a finished food product.

## Claims

1. Method for reducing the content of mineral oil saturated hydrocarbons (MOSH) in organic material, and the method is comprising the steps of:
i) Bringing oil-containing organic material in contact with solvent;
ii) Extracting oil from the oil-containing organic material; and obtaining oil-depleted organic material;
iii) Recovering solvent from the oil-depleted organic material;
iv) Collecting solvent- and oil- depleted organic material; and
Wherein at least part of the solvent has been recycled from an absorber column containing a medium-chain triglyceride (MCT) oil; and
Wherein the solvent- and oil-depleted organic material is containing not more than 6 wt.% of oil based upon the weight of the oil-depleted organic material.

2. The method according to claim 1 wherein the solvent- and oil-depleted organic material has a reduced MOSH content.

3. The method according to claim 1 or 2 wherein prior to step i) the oil-containing material is dehulled and optionally flaked; and wherein in step iii) the oil-depleted material is desolventized and/or toasted; followed by drying and/or cooling and optionally milling of the oil-depleted organic material.

4. The method according to any one of preceding claims wherein to the oil-depleted organic material of step iii) is added a material containing oil and obtainable as byproducts from oilseed crushing and/or refining process for obtaining an oil-lean organic material; followed by collecting a solvent-depleted and oil-lean organic material; and wherein the oil-lean organic material is containing not more than 8 wt.% of oil based upon the weight of the oil-depleted organic material.

5. The method according to any one of preceding claims, wherein the MCT oil has a combined content of fatty acid moieties having a carbon chain length from C6 to C12 in an amount of more than 70%, more than 75%, or more than 80 wt.% on total weight of the fatty acid moiety.

6. The method according to any one of preceding claims, wherein the MCT oil has a fatty acid moiety having a combined content of C8 and C10 fatty acids in a range of more than 92 wt%.

7. The method according to any one of preceding claims and wherein solvent is containing hexane.

8. The method according to any one of preceding claims wherein the MCT oil in the absorber column is re-used for absorbing the solvent.

9. The method according to any one of preceding claims wherein the solvent is re-used and brought in contact with oil-containing organic material without increasing the content of MOSH with more than 10%, in the collected solvent- and oil- depleted organic material.

10. The method according to any one of preceding claims wherein the oil-containing organic material is obtained from oil-bearing seeds or fruits selected from the group consisting of soybeans, rapeseeds, sunflower seeds, peanuts, cottonseeds, palm kernels, palm fruits, coconuts, com germs, olives pomace, mustard seeds, sesame seeds, shea nuts, tomato pomace, carinata seeds, camelina seeds, pongamia bean, grapeseed and combinations of two or more thereof.

11. Use of medium chain triglyceride (MCT) oil in an absorber column to reduce the content of mineral oil saturated hydrocarbons (MOSH) in oil-depleted organic material, wherein
i) An oil-containing organic material is brought in contact with solvent;
ii) Oil is extracted from the oil-containing organic material; and an oil-depleted organic material is obtained;
iii) Solvent is recovered from the oil-depleted organic material;
iv) Collecting oil-lean organic material; and
Wherein at least part of the solvent has been recycled from an absorber column containing a medium-chain triglyceride (MCT) oil.

12. The use according to claim 11 wherein to the oil-depleted organic material of step iii) is added a material containing oil and obtainable as byproducts from oilseed crushing and/or refining process for obtaining an oil-lean organic material.

13. Solvent- and oil-depleted organic material; or solvent-depleted and oil-lean organic material; with reduced MOSH content; obtainable by the method of any one of claims 1 to 10.

14. Solvent- and oil-depleted organic material comprising proteins and not more than 6 wt.% of oil based upon the weight of the oil-depleted organic material; wherein the MOSH content is not more than 10 ppm, preferably not more than 5 ppm, more preferably less than 2 ppm, most preferably less than 1 ppm.

15. Food product, or feed product comprising the solvent- and oil-depleted organic material or solvent-depleted and oil-lean organic material obtained by the method of any one of claims 1 to 10; or the solvent- and oil-depleted organic material according to claim 13 or 14; and at least one other feed and/or food ingredient.
